# EUROPÄISCHE PATENTSCHRIFT

(11) **EP 0 398 296 B1**
(45) Veröffentlichungstag und Bekanntmachung des Hinweises auf die Patenterteilung: **07.04.1993**
(21) Anmeldenummer: 90109248.6
(22) Anmeldetag: 16.05.1990
(51) Int. Cl.: B65G 21/22, E01B 25/24

(54) **Schlachthof-Fördervorrichtung**
Slaughter-house conveyor
Convoyeur pour abattoirs

(30) Priorität: 19.05.1989 DE 3916304
(43) Veröffentlichungstag der Anmeldung: 22.11.1990
(73) Patentinhaber: Banss Maschinenfabrik GmbH & Co. KG, D-35216 Biedenkopf (DE)
(72) Erfinder: Puplat, Rudolf, D-3563 Dautphetal 1 - Dautphe (DE)
(74) Vertreter: Klunker . Schmitt-Nilson . Hirsch

(56) Entgegenhaltungen:
- WO-A-84/00349
- DE-A- 1 802 073
- DE-A- 1 965 687
- FR-A- 2 214 618
- GB-A- 2 085 819

## Beschreibung

Die Erfindung bezieht sich auf eine Schlachthof- oder Kühlraum-Fördervorrichtung mit
a) einer Transportbahn für Transporthaken;
b) Tragkonsolen, die längs der Transportbahn verteilt an einer Tragkonstruktion für die Fördervorrichtung befestigt sind und die Transportbahn tragen;
c) zwei einen offenen Profilquerschnitt aufweisenden Aluminiumprofil-Schienen, die - mit ihren offenen Seiten einander zugewandtoberhalb der Transportbahn an den Tragkonsolen gehalten sind; und
d) einer Antriebskette, die über die Schienen abgestützt oberhalb der Transportbahn verläuft und mit nach unten ragenden Mitnehmern für die Transporthaken versehen ist.

Eine Fördervorrichtung dieser Art ist aus der DE-OS 18 02 073 bekannt. Bei dieser Fördervorrichtung weisen die Aluminiumprofil-Schienen einen W-förmigen Profilquerschnitt auf zur Bildung zweier übereinanderliegender Führungsbahnen, wobei in einer Führungsbahn die Antriebskette und in der anderen Führungsbahn die Antriebskette abstützende Gleitschuhe geführt werden. Die Aluminiumprofil-Schienen werden zur Versteifung von rohrförmigen Versteifungselementen aufgenommen.

Aufgrund der führenden Aufnahme der Gleitschuhe und der Antriebskette sind die bekannten Aluminiumprofil-Schienen einer hohen Reibbelastung ausgesetzt, deren Folge ein erhöhter Materialverschleiß ist, so daß die bekannten Aluminiumprofil-Schienen mit einer den Materialverschleiß berücksichtigenden Materialstärke versehen sein müssen. Darüber hinaus führt der durch die Aluminiumprofil-Schienen und deren äußere, versteifende Rohrumhüllung gebildete Schienenverbund zu einem insgesamt komplexen Aufbau, der die Installation und die Wartung einer derartigen Schiene erschwert. Außerdem ergibt sich aufgrund der äußeren Umhüllung trotz der verwendeten Aluminiumprofile ein relativ hohes Eigengewicht des Schienenverbunds, so daß bei der Montage vor Ort ein erheblicher Kraft-, Personal- und Montagehilfsmittelaufwand erforderlich ist.

Der Erfindung liegt daher die Aufgabe zugrunde, eine Fördervorrichtung der eingangs genannten Art zu schaffen, die einfacher und leichter aufgebaut und damit preisgünstiger an Ort und Stelle montierbar ist.

Zur Lösung dieser Aufgabe ist erfindungsgemäß vorgesehen, daß
e) die Aluminiumprofil-Schienen zur Aufnahme von Mitnehmerwagen, die die Mitnehmer mit der Antriebskette verbinden, U-förmig ausgebildet sind, und
f) die Aluminiumprofil-Schienen unmittelbar an die Konsolen angeschraubt sind.

Durch die Kombination von U-förmig ausgebildeten Aluminiumprofil-Schienen, die sich bei gleicher Querschnittsfläche im Vergleich zu den bekannten Aluminiumprofil-Schienen durch ein höheres axiales Flächenträgheitsmoment auszeichnen, und mittels Mitnehmerwagen in den Aluminiumprofil-Schienen reibungsarm geführter Antriebskette wird eine leichtere Ausbildung der Aluminiumprofil-Schienen ermöglicht. Dieser vorteilhafte Effekt wird durch den Verzicht auf eine äußere Umhüllung der Aluminiumprofil-Schienen und deren unmittelbare Befestigung an den Konsolen noch weiter verstärkt.

Auch gegenüber der aus der DE-OS 19 65 687 bekannten Fördervorrichtung in Form einer Kettenführungsschiene erweist sich die erfindungsgemäße Förderforrichtung als besonders leicht und einfach im Aufbau. Die aus einem geschlitzten Profil gebildete Kettenführungsschiene ist als tragendes Bauelement ausgeführt, an dem die Konsolen zur Aufnahme der Rohrbahn befestigt sind, so daß eine besonders stabile und daher schwergewichtige Ausführung der Kettenführungsschiene die Folge ist.

Bei der erfindungsgemäßen Fördervorrichtung ist die Transportbahn, wie an sich bekannt, vorzugsweise als Rohrbahn, mit oder ohne obere Kunststoffeinlage zur Reibungsverminderung, ausgebildet.

Vorzugsweise sind die Aluminiumprofile klemmend an die Konsolen angeschraubt, wiewohl beispielsweise auch ein Hindurchschrauben durch Bohrungen in den Aluminiumprofilen möglich ist.

Eine besonders günstige Art der Schraubverbindung zwischen den Aluminiumprofilen und den Tragkonsolen ergibt sich, wenn - vie bevorzugt - die Aluminiumprofile oben und unten längsverlaufende Vorsprünge aufweisen, die von den Schraubverbindungen mit der jeweiligen Konsole hintergriffen sind. Es ist günstig, daß sich derartige längsverlaufende Vorsprünge gerade bei Aluminiumprofilen besonders einfach herstellen lassen. Man kann vorsehen, daß diese Vorsprünge eine von ihrem Rand nach innen abnehmende Materialstärke haben. In diesem Fall kann man Hammerkopfschrauben für die Schraubverbindungen einsetzen, die sich besonders unkompliziert montieren lassen.

Um einer Kontaktkorrosion zwischen den Aluminiumprofilen und den Tragkonsolen vorzubeugen, kann man dort vorzugsweise kontaktkorrosionsverhindernde Zwischenlagen, insbesondere aus Kunststoff, vorsehen.

Es ist in Ausgestaltung der Erfindung bevorzugt, die Abstützung der Antriebskette an den Aluminiumprofilen unter möglichst weitgehender Verwendung von Kunststoff auszuführen, zumal diese Abstützung in erster Linie lediglich das Eigengewicht der Antriebskette übertragen muß. Konkret sind bevorzugt Mitnehmerwagen insgesamt aus Kunststoff, Mitnehmerwagen mit seitlichen Kunststoff-Gleitstücken oder Kunststoff-Rollen, an der Antriebskette befestigte, seitliche Kunststoff-Gleitstücke oder Kunststoff-Rollen.

Die Erfindung und Ausgestaltungen der Erfindung werden im folgenden anhand von zeichnerisch dargestelltn Ausführungsbeispielen noch näher erläutert. Es zeigt:
- Fig. 1: einen Querschnitt einer Transportvorrichtung;
- Fig. 2: einen Querschnitt eines abgewandelten Aluminiumprofils für die Fördervorrichtung gemäß Fig. 1.

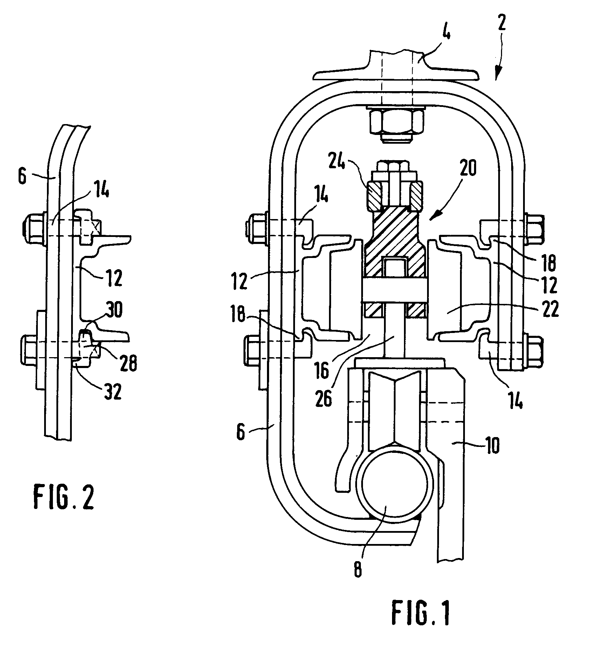

In Fig. 1 oben erkennt man den unteren Endbereich einer Tragkonstruktion 4 für die Fördervorrichtung 2, vorliegend in Form eines in Längsrichtung der Transportvorrichtung 2 verlaufenden Doppel-T-Trägers, der seinerseits unter der Decke eines Schlachthofs, Kühlraums, Kühlhauses oder dergleichen befestigt ist. An der Tragkonstruktion 4 sind in Längsrichtung der Transportvorrichtung 2 - nicht notwendigerweise gleichmäßig - verteilt Tragkonsolen 6 angeschraubt, die im gezeichneten Querschnitt im wesentlichen die Gestalt eines aufrechten Hohlrechtecks haben, wobei die "Ecken" mit großem Radius abgerundet verlaufen und sozusagen ein Eckbereich fehlt.

Auf dem Endbereich desjenigen Tragkonsolenschenkels, der auf einer Seite nach unten und dann abgebogen ein Stuck waagerecht verläuft, ist eine als Transportbahn dienende Rohrbahn 8 angeschraubt. Auf der Rohrbahn sind Traghaken 10 verfahrbar, von denen in Fig. 1 einer mit seinem oberen Bereich erkennbar ist. Der Traghaken 10 führt durch die beschriebene "offene Ecke" der Konsole 6 nach unten, wo an ihm Schlachttiere oder Schlachttierteile aufgehängt sind.

Etwas oberhalb der Mitte sind innenseitig an der Konsole 6 zwei Aluminiumprofile 12 durch Klemmschrauben 14, in der gezeichneten Ausführungsform ausgebildet als Hammerkopfschrauben, angeschraubt, und zwar derart, daß die offenen Seiten der Aluminiumprofile 12 einander zugewandt sind. Zwischen der flachen Rückseite jedes Aluminiumprofils 12 und der Tragkonsole 6 kann sich eine nicht eingezeichnete Kunststoff-Zwischenlage befinden. Die Tragkonsole 6 ist so breit, daß zwischen den offenen Seiten der Aluminiumprofile 12 ein beispielsweise 50 bis 100 mm breiter Schlitz 16 verbleibt.

Man erkennt, daß die Aluminiumprofile 12 sozusagen in der Ebene ihrer vertikalen Rückwand längsverlaufende Vorsprünge 18 aufweisen, die in der gezeichneten Einbaulage der Aluminiumprofile 12 oben und unten sind. Die Vorsprünge 18 haben eine vom Längsrand nach innen abnehmende Materialstärke. Entsprechend haben die Hammerkopfschrauben 14 einen hinterschnitten-abgeschrägten Hammerkopf, der hinter den betreffenden, abgeschrägten Vorsprung 18 greift. Die Hammerkopfschrauben führen durch waagerechte Bohrungen in der Tragkonsole 6 nach außen, wo eine Mutter aufgeschraubt ist.

In Fig. 1 ist ferner ein Kettenwagen bzw. Mitnehmervagen 20 eingezeichnet, der insgesamt aus Kunststoff besteht und sich über seitlich vorstehende Kunststoff-Rollen 22 auf den unteren, waagerechten Schenkeln der beiden Aluminiumprofile 12 in Längsrichtung verfahrbar abstützt. Eine Förderkette 24 ist auf dem Mitnehmerwagen 20 befestigt. Mitnehmer 26 der Förderkette 24 bzw. der Mitnehmerwagen greifen hinter den oberen Endbereich des jeweiligen Transporthakens 10.

Das in Fig. 2 dargestellte, abgewandelte Aluminiumprofil 12 unterscheidet sich von den in Fig. 1 gezeichneten Aluminiumprofilen 12 dadurch, daß die Vorsprünge 18 auf ihrer der Tragkonsole 6 abgewandten Seite parallel zur Tragkonsole 6 verlaufen. In diesem Fall werden Schrauben 14 mit außenliegenden Schraubköpfen und Spezialmuttern 28 eingesetzt, die mit einer seitlichen Lasche 30 hinter den Vorsprung 18 greifen und an der gegenüberliegenden Seite einen in Schraubenlängsachse weisenden Vorsprung 32 zur Anlage an der Innenseite der Tragkonsole 6 aufweisen.

Man sieht, daß die Tragkonsolen 6 mit Ausnahme der beschriebenen "offenen Ecke" zu ihrer aufrechten Längsmittelebene symmetrisch sind. Man kann also die gleichen Tragkonsolen 6 wahlweise für Rohrbahnabschnitte mit in Förderrichtung links von der Rohrbahn 8 herabführenden Transporthaken 10 und für Rohrbahnabschnitte mit in Förderrichtung rechts von der Rohrbahn 8 herabführenden Transporthaken 10 einsetzen, wenn man die Tragkonsolen 6 seitenverkehrt einbaut.

## Patentansprüche

1. Schlachthof- oder Kühlraum-Fördereinrichtung (2) mit
(a) einer Transportbahn (8) für Transporthaken (10);
(b) Tragkonsolen (6), die längs der Transportbahn (8) verteilt an einer Tragkonstruktion (4) für die Fördervorrichtung (2) befestigt sind und die Transportbahn (8) tragen;
(c) zwei einen offenen Profilquerschnitt aufweisenden Aluminiumprofil-Schienen (12), die - mit ihren offenen Seiten einander zugewandt - oberhalb der Transportbahn (8) an den Tragkonsolen (6) gehalten sind; und
(d) einer Antriebskette (24), die über die Schienen (12) abgestützt oberhalb der Transportbahn (8) verläuft und mit nach unten ragenden Mitnehmern (26) für die Transporthaken (10) versehen ist,
dadurch gekennzeichnet, daß
(e) die Aluminiumprofil-Schienen (12) zur Aufnahme von Mitnehmerwagen (20), die die Mitnehmer (26) mit der Antriebskette (24) verbinden, U-förmig ausgebildet sind und
(f) die Aluminiumprofil-Schienen (12) unmittelbar an die Konsolen (6) angeschraubt sind.

2. Fördereinrichtung nach Anspruch 1,
dadurch gekennzeichnet,
daß die Aluminiumprofile (12) klemmend angeschraubt sind.

3. Fördereinrichtung nach Anspruch 1 oder 2,
dadurch gekennzeichnet,
daß die Aluminiumprofile (12) oben und unten längsverlaufende Vorsprünge (18) aufweisen, die von den Schraubverbindungen (14) mit der jeweiligen Konsole (6) hintergriffen sind.

4. Fördereinrichtung nach Anspruch 3,
dadurch gekennzeichnet,
daß die Vorsprünge (18) eine vom Rand nach innen abnehmende Materialstärke haben und daß Hammerkopfschrauben (14) für die Schraubverbindungen eingesetzt sind.

5. Fördereinrichtung nach einem der Ansprüche 1 bis 4,
dadurch gekennzeichnet,
daß zwischen den Aluminiumprofilen (12) und den Tragkonsolen (6) kontaktkorrosionisverhindernde Zwischenlagen vorgesehen sind.

6. Fördereinrichtung nach einem der Ansprüche 1 bis 5,
dadurch gekennzeichnet,
daß sich die Antriebskette (24) über Mitnehmerwagen (20) mit seitlichen Kunststoff-Gleitstücken oder seitlichen Kunststoff-Rollen (22) in den Aluminiumprofil-Schienen (12) abstützt.

## Claims

1. A slaughterhouse or cold storage conveyor (2) comprising
(a) a conveying track (8) for conveying hooks (10);
(b) supporting brackets (6) distributed along the conveying track (8) and attached to a supporting structure (4) for the conveyor (2) and carrying the conveying track (8);
(c) two profiled aluminium rails (12) having an open cross-sectional profile and held on the supporting brackets (6) above the conveying track (8) - with their open sides facing each other; and
(d) a drive chain (24) extending above the conveying track (8) while being supported via the rails (12) and being provided with downwardly projecting drivers (26) for the conveying hooks (10),
**characterized in that**
(e) the profiled aluminium rails (12) are of U-shaped configuration for receiving driver carriages (20) connecting the drivers (26) to the drive chain (24), and
(f) the profiled aluminium rails (12) are directly attached to the brackets (6) by threaded connection.

2. A conveyor according to claim 1,
**characterized in that** the profiled aluminium rails (12) are attached by threaded connection in clamping manner.

3. A conveyor according to claim 1 or 2,
**characterized in that** the profiled aluminium rails (12) are formed at the top and at the bottom with longitudinally extending projections (18) behind which engage the threaded connections (14) with the respective bracket (6).

4. A conveyor according to claim 3,
**characterized in that** the projections (18) have a material thickness decreasing inwardly from the edge, and in that hammer head screws (14) are employed for the threaded connections.

5. A conveyor according to any one of claims 1 to 4,
**characterized in that** intermediate layers preventing contact corrosion are provided between the profiled aluminium rails (12) and the supporting brackets (6).

6. A conveyor according to any one of claims 1 to 5,
**characterized in that** the drive chain (24) is supported in the profiled aluminium rails (12) via driver carriages (20) with lateral plastics sliders or lateral plastics rollers (22).

## Revendications

1. Dispositif de convoyage (2) pour abattoir ou local frigorifique comportant
a) une voie transport (8) pour des crochets de transport (10) ;
b) des consoles de support (6) qui sont fixées sur une construction de support (4) et réparties le long de la voie de transport (8), pour le dispositif de convoyage (2) et qui portent la voie de transport (8) ;
c) deux rails profilés (12) en aluminium présentant une section transversale profilée ouverte, qui sont maintenus - avec leurs côtés ouverts tournés l'un vers l'autre - au-dessus de la voie de transport (8), sur les consoles de support (6) ; et
d) une chaîne de transmission (24) qui, soutenue par les rails (12), s'étend au-dessus de la voie de transport (8) et est dotée d'entraîneurs (26), faisant saillie vers le bas, pour les crochets de transport (10),
caractérisé en ce que
e) les rails profilés (12) en aluminium ont une forme en U, pour recevoir des chariots entraîneurs (20) qui relient les entraîneurs (26) avec la chaîne de transmission (24) et
f) les rails profilés (12) en aluminium sont directement vissés sur les consoles (6).

2. Dispositif de convoyage selon la revendication 1, caractérisé en ce que les profilés (12) en aluminium sont vissés bloquants.

3. Dispositif de convoyage selon les revendications 1 ou 2, caractérisé en ce que les profilés (12) en aluminium présentent à leur partie supérieure et leur partie inférieure des saillies (18) s'étendant sur leur longueur, derrière lesquelles passent les assemblages vissés (14) avec la console (6) correspondante.

4. Dispositif de convoyage selon la revendication 3, caractérisé en ce que les saillies (18) ont une épaisseur de matière diminuant du bord vers l'intérieur et en ce que l'on utilise pour les assemblages vissés des vis à tête de marteau (14).

5. Dispositif de convoyage selon l'une des revendications 1 à 4, caractérisé en ce que des couches intermédiaires, empêchant la corrosion par contact, sont prévues entre les profilés (12) en aluminium et les consoles de support (6).

6. Dispositif de convoyage selon l'une des revendications 1 à 5, caractérisé en ce que la chaîne de transmission (24) est soutenue dans les rails profilés (12) en aluminium, par des chariots entraîneurs (20) avec coulisseaux latéraux en matière plastique ou roulettes latérales (22) en matière plastique.
